# EUROPEAN PATENT APPLICATION

(11) **EP 3 115 619 A1**
(43) Date of publication of application: **11.01.2017**
(21) Application number: 16178127.3
(22) Date of filing: 06.07.2016
(51) Int. Cl.: F04D 29/68, F01D 5/14

(54) **COMPRESSOR ENDWALL BOUNDARY LAYER REMOVAL**

(30) Priority: 07.07.2015 US 201514793572
(71) Applicant: United Technologies Corporation, Farmington, CT 06032 (US)
(72) Inventor: EPSTEIN, Alan H., Lexington, MA 02421 (US)
(74) Representative: Leckey, David Herbert

(57) **Abstract**

A compressor (44, 52; 100) is provided. The compressor (44, 52; 100) may comprise a blade (108) configured to rotate about an axis (A-A'), an inner endwall (104) coupled to the blade (108), and an outer endwall (102) radially outward from the blade (108) and the inner endwall (104). The outer endwall (102) and the inner endwall (104) may define a flow path. A vane (106) may be disposed aft of the blade (108) and coupled to the outer endwall (104), and a bleed passage (110, 117, 118) may be selectively positioned to extract a boundary layer flow (BL). A method of locating bleed passages (110, 117, 118) is also provided. The method may include analyzing at least one an entropy or a temperature of a boundary layer flow (BL), identifying endwall locations where the entropy or the temperature are elevated, and forming a bleed passage (110; 117, 118) at the endwall locations.

## Description

The present disclosure relates to gas turbine engines, and, more specifically, to removing boundary layer conditions in compressor sections of gas turbine engines.

### BACKGROUND

Aircraft may bleed compressed air from the compressor section of gas turbine engines to power pneumatic systems or cool engine components, for example. Typically, 20% to 30% of the air entering a compressor may be removed as a bleed air stream. However, air in the compressor section has had work performed on it in the form of compression. Thus, removing compressed air from a compressor section may reduce the efficiency of an engine. In many cases, air in the compressor section may be removed from the outer wall of the compressor at a suitable location that is closest to the desired application without further considerations.

Air moving through a compressor during the compression process may also exist at varying temperatures at different locations in a compressor. For example, air near a boundary (referred to herein as a boundary layer) may have a higher temperature during operation than air removed away from the boundary at the same stage of compression. Higher temperature air may increase energy consumption during compression, as compressing hot air is typically more energy intensive than compressing cool air to a similar density. Thus, the presence of a boundary layer of the gas flow in compressors having an elevated temperature relative to another portion of the gas at the same compression stage may reduce engine efficiency.

### SUMMARY

A compressor may comprise a blade configured to rotate about an axis, an inner endwall coupled to the blade, and an outer endwall radially outward from the blade and the inner endwall. The outer endwall and the inner endwall may define a flow path. A vane may be disposed aft of the blade and coupled to the outer endwall, and a bleed passage may be selectively positioned to extract a boundary layer flow.

In various embodiments, the bleed passage may extend through the inner endwall aft of the blade. The bleed passage may also comprise an annular geometry and/or an opening flush with the inner endwall. The bleed passage may extend through the outer endwall aft of the blade. The bleed passage may include an opening flush with the outer endwall. The bleed passage may also be disposed on the vane, which may be cantilevered from the outer endwall. A passage may be located inside the vane and in fluid communication with the bleed passage.

A gas turbine engine may comprise a combustor configured to combust a gas, a turbine aft of the combustor and configured to rotate about an axis, and a compressor forward of the combustor and configured to compress the gas. The compressor may include a blade configured to rotate about the axis, an inner endwall coupled to the blade, an outer endwall radially outward from the blade and the inner endwall, a vane aft of the blade and coupled to the outer endwall, and a bleed passage selectively positioned to extract a boundary layer flow.

In various embodiments, the bleed passage may extend through the inner endwall aft of the blade. The bleed passage may comprise an opening flush with the inner endwall and may extend through the outer endwall aft of the blade. The bleed passage may also comprise an opening flush with the outer endwall. The bleed passage may also be disposed on a vane cantilevered from the outer endwall. A passage may be located inside the vane and in fluid communication with the bleed passage.

A method of locating bleed passages in a compressor may comprise analyzing at least one an entropy or a temperature of a boundary layer flow, identifying endwall locations where the entropy or the temperature are elevated, and forming a bleed passage at the endwall locations.

In various embodiments, the bleed passage may be configured to extract the boundary layer flow along an inner endwall. The method may also include the step of forming a passage in a vane in fluid communication with the bleed passage.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an exemplary gas-turbine engine, in accordance with various embodiments;
FIG. 2 illustrates a compressor section with exemplary bleed locations to remove boundary layer air, in accordance with various embodiments; and
FIG. 3 illustrates a process for locating bleed locations to remove boundary layer air, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

The air extraction of the present disclosure may remove the boundary layer along the inner and/or outer endwall casings of a compressor, for example a compressor of a gas turbine engine, either between blade rows or within a blade row as described by aerodynamic analysis and data, to achieve a desired combination of improvements to compressor efficiency, stability, and temperature capability. Boundary air may be removed at one, several, or each blade rows, according to various embodiments. The boundary layer air extracted from the core flowpath can be used as other compressor bleed air is used, for example, in hot-section cooling, bearing compartment buffer pressurization, and/or other bleed extraction. The boundary layer air may also be vented to an appropriate low pressure area within or external to the engine.

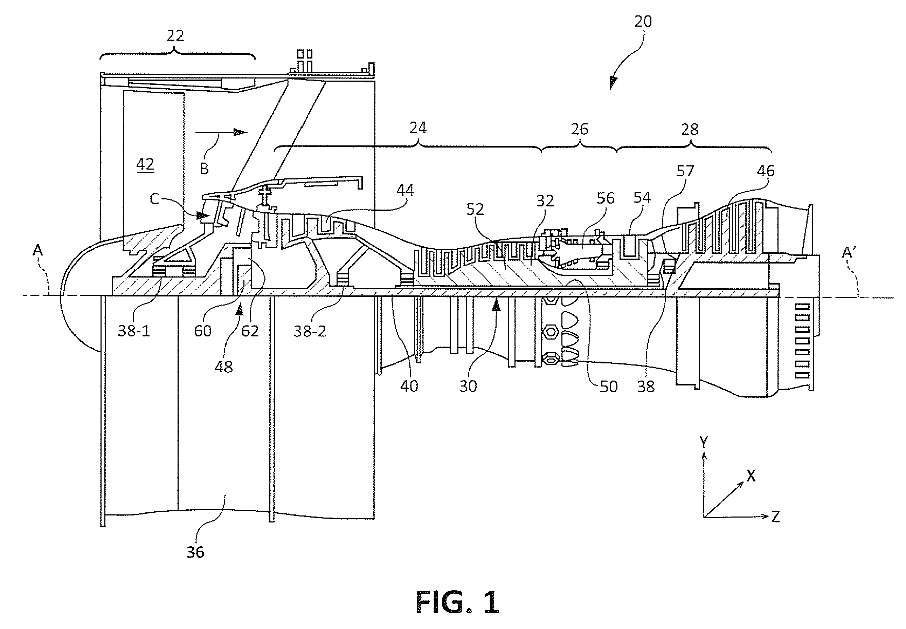

In various embodiments and with reference to FIG. 1, a gas-turbine engine 20 is provided. Gas-turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant along a bypass flow-path B while compressor section 24 can drive coolant along a core flow-path C for compression and communication into combustor section 26 then expansion through turbine section 28. Although depicted as a turbofan gas-turbine engine 20 herein, it should be understood that the concepts described herein are not limited to use with turbofans as the teachings may be applied to other types of turbine engines including one-spool and three-spool architectures.

Gas-turbine engine 20 may generally comprise a low speed spool 30 and a high speed spool 32 mounted for rotation about an engine central longitudinal axis A-A' relative to an engine static structure 36 via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2. In various embodiments, bearing system 38, bearing system 38-1, and bearing system 38-2 may be contained within a bearing housing and/or integrated into an oil delivery system, as described in further detail below.

Low speed spool 30 may generally comprise an inner shaft 40 that interconnects a fan 42, a low pressure (or first) compressor section 44 and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure (or second) compressor 52 and high pressure (or second) turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion. During compression, boundary layer air may be removed along the end walls of high pressure compressor 52 and/or low pressure compressor 44 at locations where the efficiency gain from removing the boundary layer is beneficial.

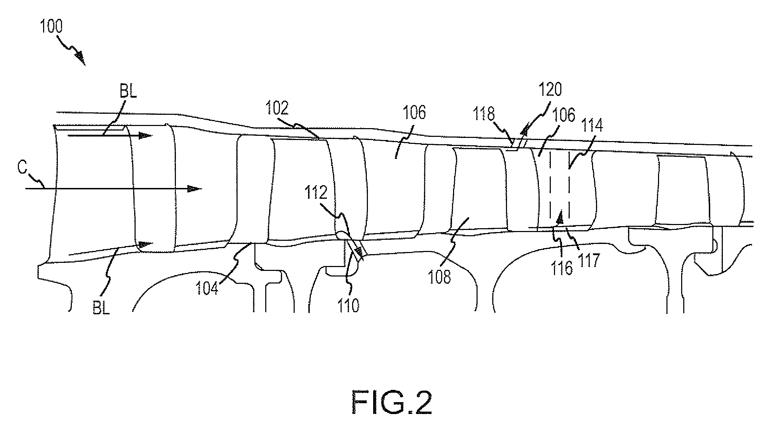

With reference to FIG. 2, compressor 100 may comprise high pressure compressor 52 and/or low pressure compressor 44 of FIG. 1 is shown, in accordance with various embodiments. Compressor 100 comprises a plurality of blades 108 alternating with vanes 106. Vanes 106 may be cantilevered with an attachment point along outer endwall 102. In that regard, vanes 106 may not be mechanically coupled to inner endwall 104 of compressor 100. The cantilevered configuration of vanes 106 may leave a tip clearance between the tip of vane 106 proximate inner endwall 104. Inner endwall 104 may thus be free to rotate while vane 106 remains stationary. A vane may have an integral circumferential shroud which forms stationary inner endwall to the airflow, under which the inner endwall 104 is free to rotate. Similarly, a tip clearance may extend between the tip of blade 108 proximate outer endwall 102 leaving blade 108 free to rotate while outer endwall 102 remains stationary.

In various embodiments, the majority of core flow C may flow through a central portion of compressor 100. Boundary layer flow BL may flow along inner endwall 104 and outer endwall 102. Boundary layer flow BL may form in the vicinity of the endwalls, and the remaining core flow C may be separated from endwalls by the boundary layer flor BL. The overall entropy of core flow C may be reduced by extracting boundary layer flow BL, thereby reducing the energy consumed in compressing core flow C. Compressor 100 may thus comprise bleed features to extract boundary layer flow.

In various embodiments, bleed passage 110 may be formed through inner endwall 104. Bleed passage 110 may be disposed aft of a blade 108 and forward of vane 106 along inner endwall 104. Although a single bleed passage 110 is depicted, bleed passages 110 may be disposed between each blade 108 and vane 106 pair or between a predetermined selection of blade 108 and vane 106 pairs. Bleed passage 110 may be a cylindrical passage with a circumferential length less than the circumference of inner endwall 104.

In various embodiments, bleed passage 110 may comprise an opening in inner endwall 104 that is flush with inner endwall 104. In various embodiments, the pressure of boundary layer flow BL may urge boundary layer flow BL into bleed passage 110 without a scooping or forced induction feature. Locations for bleed passages 110 may be determined based on flow analysis and/or thermal analysis, for example, by positioning bleed passages 110 in locations where the boundary layer flow BL has high entropy and/or temperature relative to the mean temperature of core flow C. Locating bleed passages 117 and passages 114 based on such analysis may yield increased engine efficiency in response to reduction of the entropy and/or heat of core flow C. Extracted boundary layer flow 112 may be delivered to pneumatic systems, used in cooling, or ejected from the engine, for example.

In various embodiments, boundary layer flow BL may be removed from the flow path entering bleed passages 117 located in vanes 106. Bleed passages 117 may be disposed on or near the tip of vane 106 proximate to inner endwall 104 or at a base of vane 106 proximate to outer endwall 102. Vane 106 may comprise a hollow portion to direct extracted boundary layer flow 116 from bleed passage 117 through passage 114 beyond outer endwall 102. In that regard, bleed passage 117 is in fluid communication with passage 114 that is disposed inside vane 106. Extracted boundary layer flow 116 may be delivered to pneumatic systems, used in cooling, or ejected from the engine, for example. Although a single bleed passage 117 and passage 114 are depicted, bleed passages 117 and passages 114 may be located on each vane 106 or on preselected vanes 106. Locations for bleed passages 117 and passages 114 may be determined based on flow analysis and/or thermal analysis, for example, by positioning bleed passages 117 and passages 114 in locations where the boundary layer flow BL has high entropy and/or temperature relative to the mean temperature of core flow C. Locating bleed passages 117 and passages 114 based on such analysis may yield increased engine efficiency in response to reduction of the entropy and/or heat of core flow C.

In various embodiments, bleed layer flow BL may also be extracted from a surface of outer endwall 102 by bleed passage 118. Bleed passage 118 may be similar to bleed passage 110 except bleed passage 118 may be formed in outer endwall 102. Bleed passage 118 may have an opening in outer endwall 102 that is flush with outer endwall 102. Bleed passage 118 may deliver extracted boundary layer flow 120 to pneumatic systems, used in cooling, or ejected from the engine, for example.

In various embodiments, different geometric arrangements may achieve the desired extraction of boundary layer flow BL. Along the inner endwall 104, boundary layer flow BL may be bled from within a blade row, between blade rows, and/or through holes or slots on top of or under the platform of shrouded stators, for example. Features such as bleed passage 110 and bleed passage 118 may be continuous or discontinuous in the circumferential direction and may be located at one or more axial locations within or between compression stages. Bleed air may exit from these features radially, through hollow stator airfoils such as vane 106 with passage 114. Radially inward facing bleed passages, such as bleed passage 110, may be located within or between disks, for example.

Removing the endwall, boundary layer flow BL may improve compressor efficiency in various ways. Removal may reduce the amount of work needed to compress air for combustion. Since the boundary layer flow BL is higher entropy than the free stream of core flow C, boundary layer flow BL absorbs more work to raise its pressure. Thus, thinning the boundary layer flow BL raises the efficiency of the core flow path. The efficiency improvement may be compounded by the reduced total temperature of core flow C. Furthermore, boundary layer bleeding may alter the secondary flow structure along airfoil roots. The flow alterations may reduce blockage and may enhance endwall performance.

Hollow stators, such as vane 106 with passage 114, delivering air bled from the casing endwall to lower pressure regions external to the compressor flowpath may alter tip suction. Suction can be readily applied along the blade span to further improve compressor performance. Suction may reduce in blade row loss through boundary layer removal. Suction may also reduce downstream mixing loss due to thinner wakes. Suction may further reduce mechanical forcing due to thinner wakes, and enable the use of thicker stators, should more airfoil cross-sectional area be desired for improvement of endwall suction or aeromechanics. Compressors may be limit-loaded on the endwalls, i.e., the casing boundary layers are overloaded under some operating conditions. Removal and thinning of the endwall boundary layer may thus improve the stable operating range of a compressor. Removal of the boundary layer along the inner endwall casing can significantly reduce the rim temperature in the rear compressor stages, enabling higher overall compressor discharge temperature and/or reducing mechanical design and part life challenges associated with high temperature.

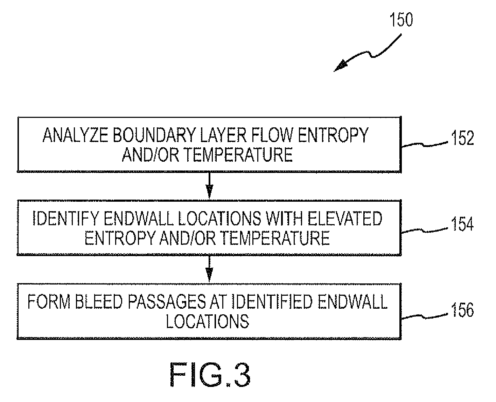

With reference to FIGs. 2 and 3, a method 150 of locating bleed passages is shown, in accordance with various embodiments. The method may include analyzing boundary layer flow BL entropy and/or temperature (Block 152). Analysis methods may include computational fluid dynamics (CFD) along the surfaces of inner endwall 104 and outer endwall 102. The resulting analysis may be used to identify endwall locations with elevated entropy and/or temperature (Block 154). The endwall locations with elevated entropy or temperature may be identified as locations that have a higher level of entropy than the free stream of core flow C. Bleed passages may be formed at identified enwall locations (Block 156) in response to the analysis results. Endwall locations and extents identified from analysis of the fluid mechanics of the compressor may be modified to conform to limitations imposed by structural concerns such as stress and fatigues as well as manufacturing considerations.

The bleed flow demands of a particular engine may exceed gas volume that can be supplied by suction of the boundary layer flow. In that regard, other provisioning may be implemented to supplement boundary layer extraction. For example, additional locations or larger extraction at identified locations may be implemented. Conversely, the bleed flow demands of an engine may less than the total boundary layer flow so that the volume of air extracted may be less than the boundary layer volume. Analysis, such outlined in FIG. 3, may be sufficient to optimize the bleed design in such embodiments.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A compressor (44, 52; 100), comprising:
a blade (108) configured to rotate about an axis (A-A');
an inner endwall (104) coupled to the blade (108);
an outer endwall (102) radially outward from the blade (108) and the inner endwall (104), the outer endwall (102) and the inner endwall (104) defining a flow path;
a vane (106) aft of the blade (108) and coupled to the outer endwall (102); and
a bleed passage (110, 117, 118) selectively positioned on at least one of the inner endwall (104), the outer endwall (102), or the vane (106) to extract a boundary layer flow (BL).

2. The compressor of claim 1, wherein the bleed passage (110, 117, 118) comprises an cylindrical geometry.

3. The compressor of claim 1 or 2, wherein the bleed passage (110) extends through the inner endwall (104) aft of the blade (108).

4. The compressor of claim 1, 2 or 3, wherein the bleed passage (110) comprises an opening flush with the inner endwall (104).

5. The compressor of claim 1 or 2, wherein the bleed passage (118) extends through the outer endwall (102) aft of the blade (108).

6. The compressor of claim 5, wherein the bleed passage (118) comprises an opening flush with the outer endwall (102).

7. The compressor of claim 1 or 2, wherein the bleed passage (117) is disposed on the vane (106).

8. The compressor of claim 7, further comprising a passage (114) inside the vane (106) and in fluid communication with the bleed passage (117).

9. The compressor of any preceding claim, wherein the vane (106) is cantilevered from the outer endwall (102).

10. A gas turbine engine (20), comprising:
a combustor (56) configured to combust a gas;
a turbine (54, 46) aft of the combustor (56) and configured to rotate about an axis (A-A'); and
the compressor (44, 52; 100) of any preceding claim, forward of the combustor (56) and configured to compress the gas.

11. A method of locating bleed passages (110, 117, 118) in a compressor (52, 44), comprising:
analyzing at least one of an entropy or a temperature of a boundary layer flow (BL);
identifying an endwall location where at least one of the entropy or the temperature are elevated; and
forming a bleed passage (110, 117, 118) at the endwall locations.

12. The method of claim 11, wherein the bleed passage (110, 117) is configured to extract the boundary layer flow (BL) along an inner endwall (104).

13. The method of claim 11 or 12, further comprising forming a passage (114) in a vane (106) in fluid communication with the bleed passage (117).
